# EUROPEAN PATENT SPECIFICATION

(11) **EP 1 924 627 B1**
(45) Date of publication and mention of the grant of the patent: **06.11.2013**
(21) Application number: 06798757.8
(22) Date of filing: 13.09.2006
(51) Int. Cl.: C08G 63/00, C08G 63/193, C08G 63/547, C09D 167/00, C08J 5/18, C09D 167/03, C09D 167/06

(54) **NOVEL POLYARYLATE AND METHOD FOR PREPARATION THEREOF**
NEUES POLYARYLAT UND VERFAHREN ZU DESSEN HERSTELLUNG
NOUVEAU POLYARYLATE ET SON PROCEDE DE PREPARATION

(30) Priority: 13.09.2005 KR 20050085213
(43) Date of publication of application: 28.05.2008
(73) Proprietor: LG Chem, Ltd., Youngdungpo-gu, Seoul 150-721 (KR)
(72) Inventor: LEE, Hyo-Sun, Daejeon Metropolitan City 305-736 (KR); KIM, Dong-Ryul, Daejeon Metropolitan City 305-721 (KR); KIM, Hee-Jung, Daejeon, 305-380 (KR); NAM, Dae-Woo, Daejeon Metropolitan City 305-782 (KR); RYU, Sang-Uk, Daejeon Metropolitan City 305-308 (KR); JEONG, Boong-Goon, Daejeon, 305-380 (KR); CHA, Ju-Eun, Daegu Metropolitan City 711-813 (KR)
(74) Representative: HOFFMANN EITLE
(86) International application number: PCT/KR2006/003630
(87) International publication number: WO 2007/032637

(56) References cited:
- EP-A1- 0 884 342
- EP-A2- 0 171 063
- EP-A2- 0 383 177
- JP-A- 03 091 525
- JP-A- 04 001 223
- SU-A1- 159 982
- US-A- 4 757 132
- US-A- 4 829 144
- V. V. KORSHAK ET AL: "Heterochain complex polyethers and polyesters Communication 52. Determination of double bonds in unsaturated polyarylates by the method of infrared spectroscopy", BULLETIN OF THE ACADEMY OF SCIENCES OF THE USSR; DIVISION OF CHEMICAL SCIENCES, vol. 14, no. 2, 1 February 1965 (1965-02-01), pages 245-251, XP55006987, ISSN: 0568-5230, DOI: 10.1007/BF00845587

## Description

### Technical Field

The present invention relates to a novel polyarylate and a method for preparation thereof. More specifically, the invention relates to a novel polyarylate in which various functional groups can be introduced to the main chain of the polymer as well as the terminal of a polymer, and the concentration of the functional groups can be adjusted, and by these functional groups, the adhesion force is improved when coated onto the substrate or protective layer, thus the polyarylate is suitably used for the coating composition or film, and to a method for preparation thereof.

### Background Art

Polyarylate is typically an aromatic polyester composed of bisphenol A, isophthalate and terephthalate.

A method of synthesizing such a polyarylate include interfacial polymerization, melt polymerization, solution polymerization and the like, and a suitable method can be selected according to the type and properties of a monomer to be introduced and the degree of the molecular weight to be obtained. As a related art for synthesizing polyarylates, USP No. 4,652,608 describes a polyarylate prepared by polymerizing alkylsubstituted phenolphthalein and bisphenol A, and a method for synthesizing the polyarylate in detail.

The conventionally known polyarylate films have high degree of optical transmission, and are extremely excellent in thermal and mechanical properties. However, the conventional polyarylate films have problems in that the melting temperature and viscosity is high, and positive birefringence is generated in the surface direction during processing.

As a result, in order to use polyarylates for optical films, steady studies have been carried out on the method of controlling the birefringence in the surface direction. Specifically, studies on introducing substituents on a polymer chain or on improving physical and mechanical properties of polyarylate by copolymerizing with other polymers are carried out.

For example, USP Nos. 5,043,413, 4,584,335, 4,929,677 and 4,977,235 describe a method for synthesizing the polyarylate by substituting the alkylene portion of a bisphenol monomer with various substituents, and USP No. 4,853,457 and US Patent Application Laid-Open No. 2002-45715 describe a method for improving physical properties of the polyarylates by forming a graft polymer or an alloy of the other polymers therewith. Also, as a technique for improving physical properties by introducing a third monomer to the polyarylate, USP No. 5,023,314 describes a method for preparing high molecular weight polyarylate through polymerization by mixing the maximum of 1.5% of trisphenol.

However, the polyarylates with improved physical properties described in the related arts have problems in that the control of birefringence is difficult when the bire-fringence is given by stretching, and that obtaining a desired phase difference is difficult due to reduction in the film thickness when stretching. Further, there are problems in that the adhesion force is not good when the polyarylate is coated on a transparent substrate such as polycarbonate substrate, etc.

USP Nos. 6,100,367 and 6,174,966 describe a method for increasing adhesion force with other substrates by using a small amount of monomers which can provide an alkoxysilyl group when synthesizing polycarbonate or polyarylate. Also, USP No. 5,258,483 describes a polyarylate to which an epoxy group is introduced instead of an alkoxysilyl group. However, there is problem in that the concentration of the epoxy group reachs several tens of ppm by being introduced at the terminal of polyarylates.

EP 0 884 342 A1 relates to a resin for coating formation comprising a polyarylate containing 2,2-bis(3-methyl-4-hydroxyphenyl)propane units and having excellent wear resistance and electric characteristics.

EP 0 383 177 A2 relates to thermotropic liquid crystalline aromatic polyesters suitable for being crosslinked by thermal treatment.

In Bulletin of the Academy of Sciences of the USSR, Division of Chemical Sciences, Vol. 14, No. 2 (1996), pages 245 to 251, V. V. Korshak et al describe a study of the principles of the reactions leading to the production of polyarylates containing allyl-substituted bisphenol components, the establishment of their composition and structure and the investigation of the processes of hardening of unsaturated polyarylates with vinyl polymers.

### Disclosure of Invention

### Technical Problem

In order to solve the above-mentioned problems in the related arts, it is an object of the present invention to provide a novel polyarylate in which various functional groups can be introduced to the main chain of the polymer as well as the terminal of a polymer, and the concentration of the functional groups can be adjusted, and by the functional groups introduced to the main chain of the polymer, the adhesion force can be improved by chemical bonds when coated onto the substrate or protective layer, and a method for preparation thereof.

Another object of the invention is to provide a coating composition comprising the novel polyarylate and a film formed therefrom.

### Technical Solution

In order to achieve the above-mentioned objects, the present invention provides a method for preparing a polyarylate comprising a unit represented by formula (1) 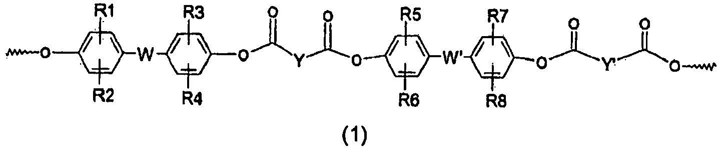 comprising the steps of
(a) copolymerizing divalent phenol, divalent aromatic carboxylic acid halide and the allyl bisphenol derivative represented by formula (2) 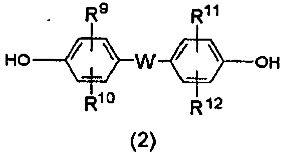 wherein
   the allyl bisphenol derivative is used in an amount of 0.1 mol% to 99.9 mol% with respect to the divalent phenol,
   R¹ to R⁸ are each independently hydrogen, alkyl having 1 to 12 carbon atoms, arylalkyl having 7 to 12 carbon atoms, aryl having 6 to 12 carbon atoms, nitrile, alkylenenitrile having 2 to 12 carbon atoms, alkoxy having 1 to 12 carbon atoms, acyl having 1 to 12 carbon atoms, alkenyl having 2 to 12 carbon atoms, alkylalkenyl having 3 to 12 carbon atoms, arylalkenyl having 8 to 12 carbon atoms or halogen,
   with the proviso that at least one of R¹ to R⁴ is alkylalkenyl having 3 to 12 carbon atoms;
   R⁹ to R¹² are each independently hydrogen, alkyl having 1 to 12 carbon atoms, arylalkyl having 7 to 12 carbon atoms, aryl having 6 to 12 carbon atoms, nitrile, alkylenenitrile having 2 to 12 carbon atoms, alkoxy having 1 to 12 carbon atoms, acyl having 1 to 12 carbon atoms, alkenyl having 2 to 12 carbon atoms, alkylalkenyl having 3 to 12 carbon atoms, arylalkenyl having 8 to 12 carbon atoms or halogen,
   with the proviso that at least one of R⁹ to R¹² is alkylalkenyl having 3 to 12 carbon atoms;
   W and W' are each independently directly bonded, or are each independently oxygen, sulfur, sulfoxide, sulfone, alkylidene having 1 to 30 carbon atoms, alkylene having 2 to 30 carbon atoms, cycloalkylidene having 3 to 30 carbon atoms, cycloalkylene having 3 to 30 carbon atoms or phenyl-substituted alkylene having 2 to 30 carbon atoms; and
   -OOCYCOO- and -OOCY'COO- are each independently terephthalic acid, isophthalic acid, dibenzoic acid or naphthalene dicarboxylic acid, in which the aromatic group may be substituted with a substituent selected from the group consisting of alkyl having 1 to 8 carbon atoms, aryl, alkylaryl and halogen;
   and
(b) introducing at least one functional group selected from an epoxide group, an alkoxy group, a hydroxy group and an amine group into the copolymer prepared in step (a).

Furthermore, the invention provides a coating composition comprising polyarylate according to the invention and a film formed therefrom.

### Brief Description of the Drawings

Fig. 1 is a diagram showing NMR spectrum of the polyarylate which is prepared according to one embodiment of the present invention.
Fig. 2 is a diagram showing NMR spectrum of the polyarylate introduced with an epoxide group, which is prepared according to one embodiment of the invention.
Fig. 3 is a diagram showing NMR spectrum of the polyarylate introduced with a hydroxy group, which is prepared according to one embodiment of the invention.
Fig. 4 is a diagram showing NMR spectrum of the polyarylate introduced with a dihydroxy group, which is prepared according to one embodiment of the invention.

### Best Mode for Carrying Out the Invention

Hereinbelow, the invention will be described in detail.

The polyarylate of the invention is prepared by a method comprising a step of copolymerizing divalent phenol, divalent aromatic carboxylic acid halide and the allyl bisphenol derivative represented by the formula (2).

The polyarylate prepared by the copolymerizing step contains at least one double bond in the main chain of a polymer via an allyl group of allyl bisphenol derivative represented by the formula (2), i.e. an allyl group is contained in at least one of R¹ to R⁴ or at least one of R⁵ to R⁸ in the formula (1). Therefore, various functional groups can be introduced into the main chain of the polyarylate through double bonds contained in the main chain of the polyarylate.

Further, the concentration of the double bonds and functional groups in the main chain of polyarylate of the invention can be adjusted by controlling the use amount of allyl bisphenol derivatives represented by the formula (2) or using allyl bisphenol derivatives with appropriate number of allyl groups when preparing the polyarylate in the invention. Moreover, the polyarylate according to the invention described above can be polymerized with other polyarylates depending on the content of allyl bisphenol derivative to divalent phenol, and then be introduced with functional groups.

As described above, examples of the functional group, which can be introduced to the polyarylate according to the invention having double bonds in the main chain of the polymer, include an epoxide group, an alkoxy group, a hydroxy group, an amine group . That is, examples of the polyarylate of the invention containing said functional groups include the polyarylate with the double bond being substituted with epoxide, the polyarylate with the double bond being substituted with alkoxy and hydroxy, the polyarylate with the double bond being substituted with dihydroxy, the polyarylate with the double bond being substituted with alkoxy and amine. In order to improve the adhesion force in the polyarylate of the invention, it is more preferable that an epoxy group or a hydroxy group is introduced.

Examples of the method for introducing functional groups to the polyarylate according to the invention include a method for substituting an allyl group with epoxide group using an epoxidizing agent, a method for substituting an allyl group with an alkoxy group (-OR) and a hydroxy group (-OH) by adding alcohol to the epoxidized polyarylate, a method for substituting an allyl group with a dihydroxy group by adding water to the epoxidized polyarylate.

Specific examples of the polyarylate of the invention include polyarylates containing a unit selected from the following formulas (3) to (6), but the scope of the invention is not limited thereto. 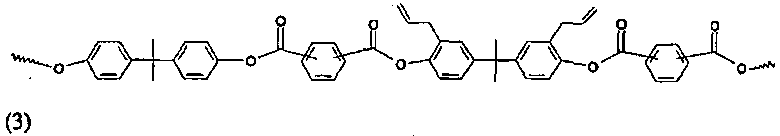 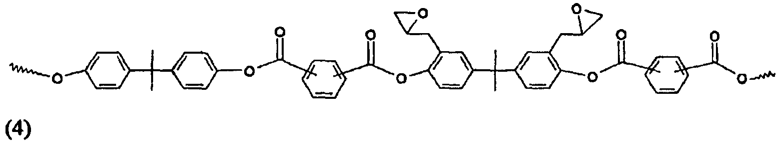 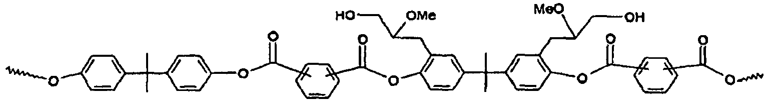 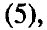 and

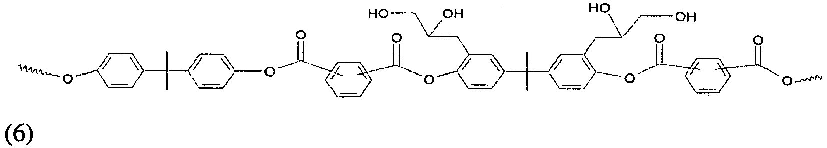

In the invention, examples of aromatic dihydroxy compounds such as divalent phenol and the allyl bisphenol derivative used in the preparation of polyarylate include bis(4-hydroxyaryl)alkane such as bis(4-hydroxyphenyl)methane, 2,2-bis(4-hydroxyphenyl)propane (BPA), 2,2-bis(4-hydroxyphenyl)ethane, 2,2-bis(4-hydroxy-3-methylphenyl)propane, 2,2-bis(4-hydroxyphenyl)heptane, 2,2-bis(4-hydroxy-3,5-dichlorophenyl)propane, 2,2-bis(4-hydroxy-3,5-dibromophenyl)propane, bis(4-hyroxyphenyl)phenylmethane, 4,4-dihydroxyphenyl-1,1-m-diisopropylbenzene, 4,4-dihydroxyphenyl-9,9-fluorene, 2,2-bis(4-hydroxyphenyl)fluorene (BHPF), 9,9-bis(3,5-dimethyl-4-hydroxyphenyl)fluorene (BDMPF) or 9,9-bis(3,5-dibromo-4-hydroxyphenyl)fluorene (BFBPF); aromatic dihydroxy compounds containing alkenyl such as 4,4'-(1-methylethylidene)bis(2-(2-propenyl)phenol and the like, and these may be used in the mixture of one or more kinds. Further, examples of aromatic dihydroxy compounds include bis(hydroxyaryl)cycloalkane such as 1,1-bis(4,4-hydroxyphenyl)cyclopentane, 1,1-bis(4,4-hydroxyphenyl)cyclohexane, 1-methyl-1-(4-hydroxyphenyl)-4-(dimethyl-4-hydroxyphenyl)cyclohexane, 4-{1-[3-(4-hydroxyphenyl)-4-methylcyclohexyl]-1-methylethyl}phenol, 4,4-[1-methyl-4-(1-methylethyl)-1,3-cyclohexylidyl]bisphenol or 2,2,2,2-tetrahydro-3,3,3,3-tetramethyl-1,1-spirobis-[1H]-indene-6,6-diol, and these may be used in a mixture of one or more kinds. Also, examples of aromatic dihydroxy compounds include dihydroxydiaryl ethers such as bis(4-hydroxyphenyl) ether, bis(4-hydroxy-3,5-dichlorophenyl) ether or 4,4-dihydroxy-3,3-dimethylphenyl ether; dihydroxydiaryl sulfates such as 4,4-dihydroxydiphenyl sulfate or 4,4-dihydroxy-3,3-dimethyldiphenyl sulfate; dihydroxydiaryl sulfoxides such as 4,4-dihydroxydiphenyl sulfoxide or 4,4-dihydroxy-3,3-dimethyldiphenyl sulfoxide; and dihydroxydiaryl sulfones such as 4,4-dihydroxydiphenyl sulfone or 4,4-dihydroxy-3,3-dimethyldiphenyl sulfone; and the like, and these may be used alone or in a mixture of two or more kinds.

In the invention, the kind of divalent aromatic carboxylic acid halide that can be used in preparing the polyarylate is not particularly limited, but terephthalic acid halides, isophthalic acid halides, dibenzoic acid halides, naphthalene dicarboxylic acid halides, or aromatic dicarboxylic acid halides in which the aromatic groups of these compounds are substituted with alkyl having 1 to 8 carbon atoms, aryl, arylalkyl or halogen, can be used. These may be used alone or in a mixture of two or more. In the invention, it is more preferable that isophthalic acid halide or terephthalic acid halide is used alone or in a mixture thereof.

In the invention, it is preferable that a dihydroxy monomer including the divalent phenol and the allyl bisphenol derivative, and a divalent aromatic carboxylic acid halide are used in the molar ratio of 1:1. Further, the allyl bisphenol derivative is used in the amount of 0.1 mol% to 99.9 mol% with respect to the divalent phenol. Also, it is preferable that the allyl bisphenol derivative is contained in the amount of 0.01 to 49.9 mol% in the polyarylate of the invention. In addition, it is preferable that the polyarylate according to the invention has the molecular weight of 10,000 g/mol or higher.

In order to improve the surface characteristics or the adhesion force of a film fabricated by polyarylates, additives known in the field of arts can be further used, in addition to the above-mentioned components, when preparing the polyarylate according to the invention.

In the invention, the method for copolymerizing the above-mentioned components is not particularly limited, but a method known in the field of arts can be used. Specific methods are exemplified in Examples described below.

The polyarylate prepared as in the above can be prepared in a form of solid, powder, solution, but it can be prepared in any form depending on its use, for example, the coating method to be applied when using as a coating composition.

The invention provides a coating composition comprising polyarylate containing a unit represented by the formula (1) or a film formed from the polyarylate. The coating composition or the film according to the invention can be applied for preparing an optical film or for an optical film.

The coating composition according to the invention can be prepared, for example, in the form of a solution by adding a solvent to the polyarylate according to the invention. Moreover, the film according to the invention can be fabricated, for example, by coating the coating composition onto a substrate such as a glass plate or a polycarbonate film at room temperature, and stepwise volatizing the solvent. The coating method is not particularly limited, but a method known in the field of arts, for example, the bar coating can be used. According to the invention, the film thickness is preferably 1 to 100 µm.

In this case, as the solvent, methylene chloride, dichloroethane, dioxalane, tetrahydrofuran can be used. It is preferable that the coating composition containing such the solvent is a solution with the concentration of 5 to 25% by weight.

The polyarylate according to the invention is not only excellent in the adhesion force by chemically bonding through double bonds or functional groups introduced to the main chain of the polymer when coated onto the substrate or supporting layer, but also the polyarylate itself can be used for an optical film or a coating composition for fabricating an optical film without performing the stretching process unlike the conventional optical films.

Hereinbelow, preferred Examples are presented to help the understanding of the invention, but the following Examples only exemplify the present invention, and the scope of the invention is not limited to these Examples.

### Mode for the Invention

The reagents and solvents used in the following Examples were purchased from Sigma-Aldrich Corp. and Merck & Co., Inc. and purified by a standard method. For the method of synthesis of polyarylate, a solution polymerization is possible, but in order to obtain polyarylate in an appropriate molecular weight, the interfacial polymerization was carried out. In order to confirm the structure of the synthesized polyarylate, 400 MHz NMR was used to obtain a spectrum, and GPC (Viscotek, TriSEC Model 302) and DSC (TA Instrument) were used to measure the molecular weights and the glass transition temperatures (Tg).

### [Example 1]

### Synthesis of polyarylate having 3 mol% of allyl bisphenol derivative in dihydroxy bisphenol monomer

To a reactor equipped with a stirrer, 37.0 g of 2,2-bis(4-hydroxyphenyl)propane as divalent phenol, 1.8 g of 2,2-bis(3-(2-propenyl)-4-hydroxyphenyl)propane as allyl bisphenol derivative, 14.9 g of NaOH and 357 g of distilled water were mixed and the mixture was dissolved by stirring. Then, while maintaining the reactor temperature at 20°C, a solution of 0.6 g of benzyltriethyl ammonium bromide in 35.7 g of methylene chloride was added and then stirred vigorously. Next, 1.5 g of 4-t-butylphenol as a molecular weight modifier and an aqueous solution of 0.4 g of NaOH in 10 g of water were added to prepare an aqueous mixed solution.

Apart from the above, 34 g of an aromatic carboxylic acid mixture mixed with the same moles of isophthalic acid chloride and terephthalic acid chloride was dissolved in 452 g of methylene chloride. This solution was added to the previously prepared aqueous mixed solution. After polymerizing it under stirring at 500 rpm for 1 hour, a solution of 0.9 g of benzoic acid in 9.4 g of methylene chloride was added and further stirred for 10 minutes. Then, 15 mL of acetic acid was added to terminate the reaction, and washed multiple times with 1 fold-volume of methylene chloride and 2 fold-volume of distilled water. The washing was repeated until the remaining solution had a conductance of 20 µs/cm or lower, and the solution was added to methanol to precipitate polymers.

The composition of the dihydroxy bisphenol monomer in the synthesized polyarylate was such that the content of 2,2-bis(4-hydroxyphenyl)propane (BPA) was 97 mol% and the content of allyl bisphenol derivative was 3 mol%. The glass transition temperature and the weight average molecular weight of the synthesized polyarylate were 190°C and 46,500 g/mol, respectively (Classification 5 in Table 1).

### [Example 2]

### Synthesis of polyarylate having 5 mol% of allyl bisphenol derivative in dihydroxy bisphenol monomer

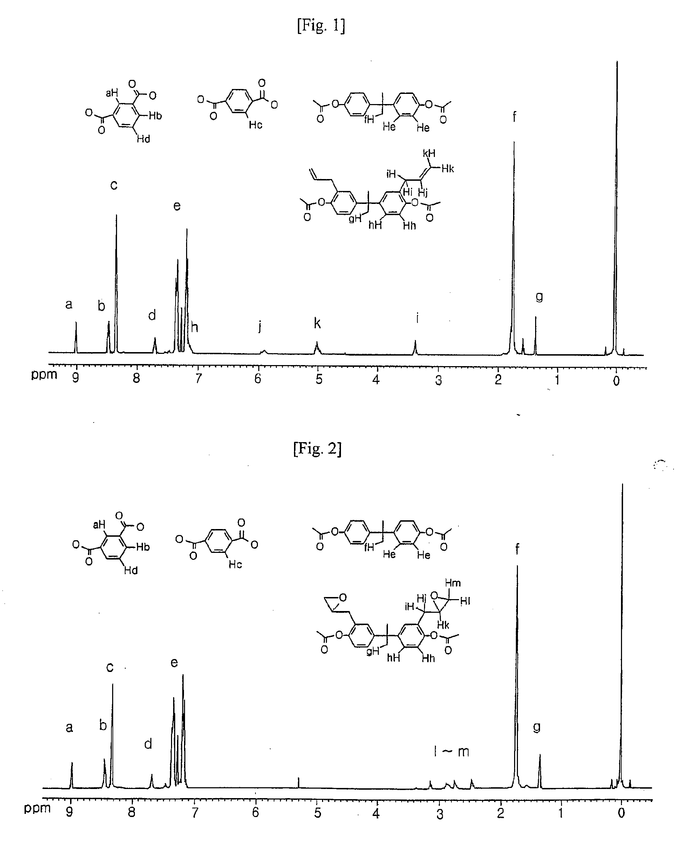

Polyarylate was synthesized in the same manner as in Example 1, except that the stirring speed during the polymerization was 700 rpm. The composition of the dihydroxy bisphenol monomer in the synthesized polyarylate was such that the content of 2,2-bis(4-hydroxyphenyl)propane (BPA) was 95 mol%, and the content of allyl bisphenol derivative was 5 mol%. The glass transition temperature and the weight average molecular weight of the synthesized polyarylate were 194°C and 104,000 g/ mol, respectively. The NMR spectrum of the synthesized polyarylate is illustrated in Fig. 1 (Classification 11 in Table 1).

### [Example 3]

### Synthesis of polyarylate introduced with an epoxide group having 5 mol% of allyl bisphenol derivative in dihydroxy bisphenol monomer

To the polyarylate prepared in the same manner as in Example 2, m-CPBA (meta chloro perbenzoic acid) as an epoxidizing agent was added and stirred in methylene chloride for 1 day to introduce an epoxide group to polyarylate. Specifically, to 7.5 g of polyarylate prepared in the same manner as in Example 2, 1.2 g of meta chloro perbenzoic acid (m-CPBA) was mixed to remove air. Then, 300 mL of anhydrous methylene chloride was added and stirred at room temperature for 24 hours. The epoxide group being introduced was confirmed using NMR. After appropriately diluting the solution with methylene chloride, precipitation was performed in methanol. The precipitates were washed with methanol, and then dried. The glass transition temperature and the weight average molecular weight of the synthesized polyarylate were 200°C and 96,000 g/mol, respectively. The NMR spectrum of the synthesized polyarylate is illustrated in Fig. 2 (Classification 13b in Table 1).

### [Example 4]

### Synthesis of polyarylate introduced with methoxy-hydroxy group having 5 mol% of allyl bisphenol derivative in dihydroxy bisphenol monomer

To the polyarylate introduced with an epoxide group prepared in the same manner as in Example 3, anhydrous methanol was added in the presence of an acid catalyst (1 % sulfuric acid) to introduce a methoxy-hydroxy group.

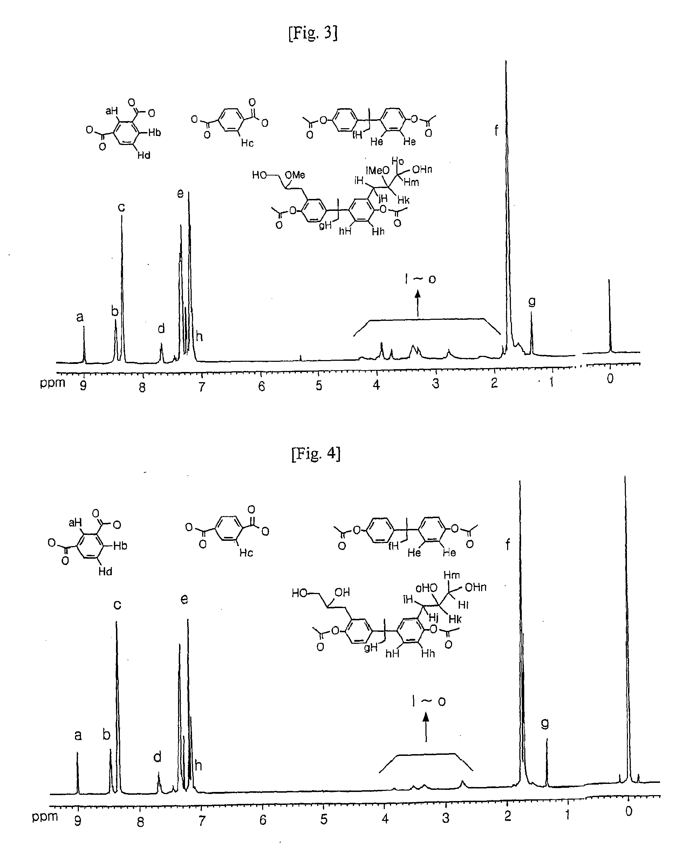

Specifically, 10 g of the polyarylate introduced with an epoxide group was dissolved in 200 mL of anhydrous THF, then 0.5 mL of sulfuric acid and 3 mL of anhydrous methanol were added thereto and the mixture was stirred at room temperature for 2 hours. The reaction being completed was confirmed using NMR. Here, the solution was diluted with a suitable amount of THF, and then the diluted solution was precipitated in methanol. Thus obtained polyarylate had functional groups of methoxy (OMe) and alcohol (OH). The glass transition temperature and the weight average molecular weight of the synthesized polyarylate were 198°C and 115,000 g/ mol, respectively. The NMR spectrum of the synthesized polyarylate is illustrated in Fig. 3 (Classification 12a in Table 1).

### [Example 5]

### Synthesis of polyarylate introduced with dihydroxy group having 5 mol% of allyl bisphenol derivative in dihydroxy bisphenol monomer

10 g of the polyarylate introduced with an epoxide group prepared in the same manner as in Example 3 was dissolved in 200 mL of anhydrous THF. Then, 0.5 mL of sulfuric acid and 3 mL of water were added thereto and the mixture was stirred at room temperature for 1 hour for acid hydrolysis to obtain polyarylate having diol as a functional group. The glass transition temperature and the weight average molecular weight of the synthesized polyarylate were 194°C and 94,900 g/mol, respectively. The NMR spectrum of the synthesized polyarylate is illustrated in Fig. 4 (Classification 17c in Table 1).

In addition, in the same manner as in Examples 1 to 5, polyarylates were prepared by varying the composition of divalent phenol, aromatic dicarboxylic acid halide and the allyl bisphenol derivative. The compositions and physical properties of the prepared polyarylates are illustrated in the following Table 1.

**Table 1**

| Polymerization and physical properties of polyarylate according to the composition of allyl bisphenol derivative | | | | | | | |
|---|---|---|---|---|---|---|---|
| Classifica tion | Composition | | | | Tg(°C) | Molecular weight(M w) | Mw/Mn |
| | Dihydroxy monomer (mol%) | | Aromatic carboxylic acid halide (mol%) | | | | |
| | DABPA | BPA | TPC | IPC | | | |
| 1 | 0 | 100 | 50 | 50 | 207 | 70000 | 2.11 |
| 2 | 0.5 | 99.5 | 50 | 50 | 193 | 47800 | 2.10 |
| 3 | 1 | 99 | 50 | 50 | 194 | 42000 | 2.13 |
| 4a | 1 | 99 | 50 | 50 | 193 | 44500 | 2.11 |
| 5 | 3 | 97 | 50 | 50 | 190 | 46500 | 2.12 |
| 6a | 3 | 97 | 50 | 50 | 181 | 45500 | 2.21 |
| 7 | 3 | 97 | 50 | 50 | 198 | 92400 | 2.16 |
| 8 | 5 | 95 | 50 | 50 | 182 | 42200 | 2.27 |
| 9a | 5 | 95 | 50 | 50 | 190 | 50700 | 2.30 |
| 10b | 5 | 95 | 50 | 50 | 192 | 51600 | 2.17 |
| 11 | 5 | 95 | 50 | 50 | 194 | 104000 | 2.89 |
| 12a | 5 | 95 | 50 | 50 | 198 | 115000 | 2.87 |
| 13b | 5 | 95 | 50 | 50 | 200 | 96000 | 2.20 |
| 14 | 10 | 90 | 50 | 50 | 177 | 49900 | 2.65 |
| 15a | 10 | 90 | 50 | 50 | 178 | 63700 | 2.78 |
| 16b | 10 | 90 | 50 | 50 | 184 | 114000 | 4.30 |
| 17c | 10 | 90 | 50 | 50 | 194 | 94900 | 3.87 |
| 18 | 20 | 80 | 50 | 50 | 158 | 53700 | 2.25 |
| 19b | 20 | 80 | 50 | 50 | 172 | 54000 | 2.65 |
| 20 | 50 | 50 | 50 | 50 | 112 | 61200 | 4.06 |
| 21 | 100 | 0 | 50 | 50 | 79 | 42900 | 4.94 |

| | | | | | | | |
|---|---|---|---|---|---|---|---|
| DABPA : 2,2-Bis(3-(2-propenyl)-4-hydroxyphenyl)propane BPA : 2,2-Bis(4-hydroxyphenyl)propane TPC : Terephthalic acid chloride IPC : Isophthalic acid chloride a : Polyarylate having methoxy group (OMe) and hydroxy group (OH) b : Polyarylate having epoxy group c : Polyarylate having dihydroxy group | | | | | | | |

### Industrial Applicability

The polyarylate according to the present invention is a novel polyarylate prepared by copolymerizing divalent phenol, aromatic dicarboxylic acid and a third monomer, that is, an allyl bisphenol derivative, wherein by the allyl bisphenol derivative, various functional groups can be introduced to the main chain of the polymer as well as the terminal of a polymer, and the concentrations thereof can be adjusted. Further, due to the introduced double bonds and functional groups at the main chain of the polymer, it is possible to improve the adhesion force by chemically bonding when coated onto a substrate or a protective layer. Therefore, the polyarylate according to the invention is suitably used as a component for a coating composition or a film.

## Claims

1. A method for preparing a polyarylate comprising a unit represented by formula (1) 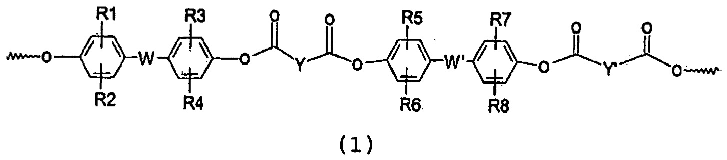 comprising the steps of
(a) copolymerizing divalent phenol, divalent aromatic carboxylic acid halide and the allyl bisphenol derivative represented by formula (2) 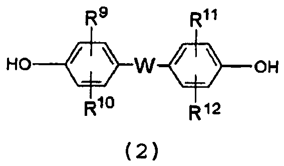 wherein
the allyl bisphenol derivative is used in an amount of 0.1 mol% to 99.9 mol% with respect to the divalent phenol,
R¹ to R⁸ are each independently hydrogen, alkyl having 1 to 12 carbon atoms, arylalkyl having 7 to 12 carbon atoms, aryl having 6 to 12 carbon atoms, nitrile, alkylenenitrile having 2 to 12 carbon atoms, alkoxy having 1 to 12 carbon atoms, acyl having 1 to 12 carbon atoms, alkenyl having 2 to 12 carbon atoms, alkylalkenyl having 3 to 12 carbon atoms, arylalkenyl having 8 to 12 carbon atoms or halogen,
with the proviso that at least one of R¹ to R⁴ is alkylalkenyl having 3 to 12 carbon atoms;
R⁹ to R¹² are each independently hydrogen, alkyl having 1 to 12 carbon atoms, arylalkyl having 7 to 12 carbon atoms, aryl having 6 to 12 carbon atoms, nitrile, alkylenenitrile having 2 to 12 carbon atoms, alkoxy having 1 to 12 carbon atoms, acyl having 1 to 12 carbon atoms, alkenyl having 2 to 12 carbon atoms, alkylalkenyl having 3 to 12 carbon atoms, arylalkenyl having 8 to 12 carbon atoms or halogen,
with the proviso that at least one of R⁹ to R¹² is alkylalkenyl having 3 to 12 carbon atoms;
W and W' are each independently directly bonded, or are each independently oxygen, sulfur, sulfoxide, sulfone, alkylidene having 1 to 30 carbon atoms, alkylene having 2 to 30 carbon atoms, cycloalkylidene having 3 to 30 carbon atoms, cycloalkylene having 3 to 30 carbon atoms or phenyl-substituted alkylene having 2 to 30 carbon atoms; and
-OOCYCOO- and -OOCY'COO- are each independently terephthalic acid, isophthalic acid, dibenzoic acid or naphthalene dicarboxylic acid, in which the aromatic group may be substituted with a substituent selected from the group consisting of alkyl having 1 to 8 carbon atoms, aryl, alkylaryl and halogen;
and
(b) introducing at least one functional group selected from an epoxide group, an alkoxy group, a hydroxy group and an amine group into the copolymer prepared in step (a).

2. A polyarylate obtainable by the method as defined in claim 1.

3. The polyarylate according to claim 2, which comprises a unit represented by the following formula (4):

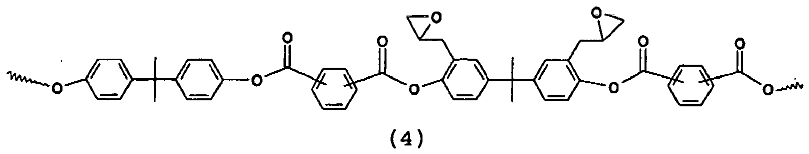

4. The polyarylate according to claim 2, which comprises a unit represented by the following formula (5):

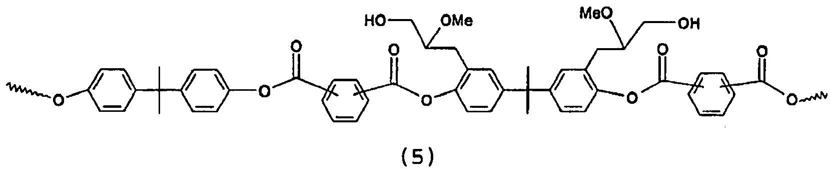

5. The polyarylate according to claim 2, which comprises a unit represented by the following formula (6):

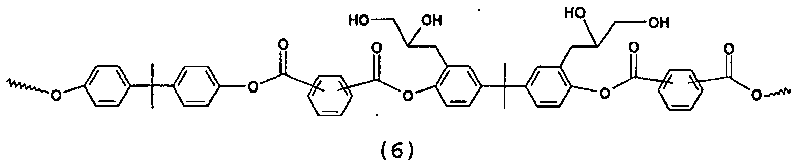

6. A coating composition which comprises the polyarylate according to any one of claims 2 to 5, having a molecular weight of 10,000 g/mol or more.

7. A film which is formed from the polyarylate according to any one of claims 2 to 5 having a molecular weight of 10,000 g/mol or more.

8. The film according to claim 7, which is an optical film.

## Patentansprüche

1. Verfahren zur Herstellung eines Polyarylats, umfassend eine Einheit der Formel (1): 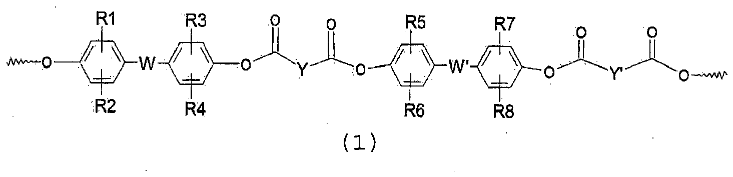 umfassend die Schritte:
(a) Copolymerisieren des divalenten Phenols, des divalenten aromatischen Carbonsäurehalogenids und des Allylbisphenolderivats der Formel (2): 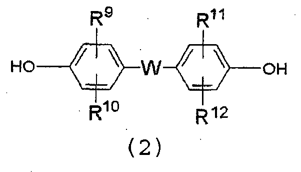 worin
das Allylbisphenolderivat in einer Menge von 0,1 bis 99,9 mol-% in bezug auf das divalente Phenol verwendet wird,
R¹ bis R⁸ jeweils unabhängig Wasserstoff, Alkyl mit 1 bis 12 Kohlenstoffatomen, Arylalkyl mit 7 bis 12 Kohlenstoffatomen, Aryl mit 6 bis 12 Kohlenstoffatomen, Nitril, Alkylennitril mit 2 bis 12 Kohlenstoffatomen, Alkoxy mit 1 bis 12 Kohlenstoffatomen, Acyl mit 1 bis 12 Kohlenstoffatomen, Alkenyl mit 2 bis 12 Kohlenstoffatomen, Alkylalkenyl mit 3 bis 12 Kohlenstoffatomen, Arylalkenyl mit 8 bis 12 Kohlenstoffatomen oder Halogen sind,
mit der Massgabe, dass mindestens eines von R¹ bis R⁴ Alkylalkenyl mit 3 bis 12 Kohlenstoffatomen ist;
R⁹ bis R¹² jeweils unabhängig Wasserstoff, Alkyl mit 1 bis 12 Kohlenstoffatomen, Arylalkyl mit 7 bis 12 Kohlenstoffatomen, Aryl mit 6 bis 12 Kohlenstoffatomen, Nitril, Alkylennitril mit 2 bis 12 Kohlenstoffatomen, Alkoxy mit 1 bis 12 Kohlenstoffatomen, Acyl mit 1 bis 12 Kohlenstoffatomen, Alkenyl mit 2 bis 12 Kohlenstoffatomen, Alkylalkenyl mit 3 bis 12 Kohlenstoffatomen, Arylalkenyl mit 8 bis 12 Kohlenstoffatomen oder Halogen sind,
mit der Massgabe, dass mindestens eines von R⁹ bis R¹² Alkylalkenyl mit 3 bis 12 Kohlenstoffatomen ist;
W und W' jeweils unabhängig direkt verbunden sind oder jeweils unabhängig Sauerstoff, Schwefel, Sulfoxid, Sulfon, Alkyliden mit 1 bis 30 Kohlenstoffatomen, Alkylen mit 2 bis 30 Kohlenstoffatomen, Cycloalkyliden mit 3 bis 30 Kohlenstoffatomen, Cycloalkylen mit 3 bis 30 Kohlenstoffatomen oder Phenyl-substituiertes Alkylen mit 2 bis 30 Kohlenstoffatomen sind; und
-OOCYCOO- und -OOCY'COO- jeweils unabhängig Terephthalsäure, Isophthalsäure, Dibenzoesäure oder Naphthalindicarbonsäure sind, in denen die aromatische Gruppe mit einem Substituenten, ausgewählt aus der Gruppe bestehend aus Alkyl mit 1 bis 8 Kohlenstoffatomen, Aryl, Alkylaryl und Halogen, substituiert sein kann;
und
(b) Einführen mindestens einer funktionellen Gruppe, ausgewählt aus einer Epoxidgruppe, einer Alkoxygruppe, einer Hydroxygruppe und einer Amingruppe, in das in Schritt (a) hergestellte Copolymer.

2. Polyarylat, erhältlich nach dem in Anspruch 1 definierten Verfahren.

3. Polyarylat gemäss Anspruch 2, das eine Einheit der nachstehenden Formel (4) umfasst:

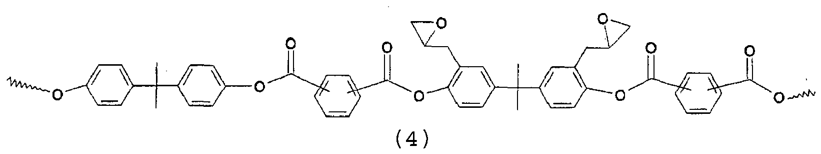

4. Polyarylat gemäss Anspruch 2, das eine Einheit der nachstehenden Formel (5) umfasst:

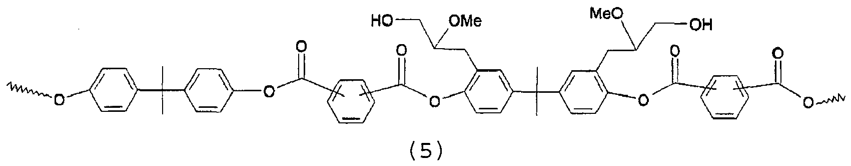

5. Polyarylat gemäss Anspruch 2, das eine Einheit der nachstehenden Formel (6) umfasst:

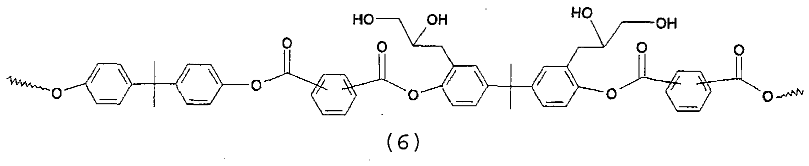

6. Beschichtungszusammensetzung, die das Polyarylat gemäss irgendeinem der Ansprüche 2 bis 5 umfasst, das ein Molekulargewicht von 10.000 g/mol oder mehr aufweist.

7. Film, der aus dem Polyarylat gemäss irgendeinem der Ansprüche 2 bis 5 gebildet wird, das ein Molekulargewicht von 10.000 g/mol oder mehr aufweist.

8. Film gemäss Anspruch 7, der ein optischer Film ist.

## Revendications

1. Procédé de préparation d'un polyarylate comprenant une unité représentée par la formule (1) 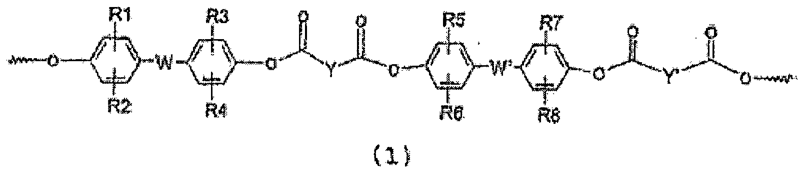 comprenant les étapes de
(a) copolymérisation d'un phénol divalent, d'un halogénure d'acide carboxylique aromatique divalent et du dérivé d'allylbisphénol représenté par la formule (2) 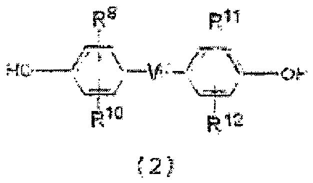 dans lequel
le dérivé d'allylbisphénol est utilisé dans une quantité de 0,1% molaire à 99,9% molaire par rapport au phénol divalent,
R¹ à R⁸ sont chacun indépendamment un hydrogène, un alkyle ayant 1 à 12 atomes de carbone, un arylalkyle ayant 7 à 12 atomes de carbone, un aryle ayant 6 à 12 atomes de carbone, un nitrile, un alkylènenitrile ayant 2 à 12 atomes de carbone, un alcoxy ayant 1 à 12 atomes de carbone, un acyle ayant 1 à 12 atomes de carbone, un alcényle ayant 2 à 12 atomes de carbone, un alkylalcényle ayant 3 à 12 atomes de carbone, un arylalcényle ayant 8 à 12 atomes de carbone ou un halogène,
sous réserve qu'au moins un parmi R¹ à R⁴ soit un alkylalcényle ayant 3 à 12 atomes de carbone ;
R⁹ à R¹² sont chacun indépendamment un hydrogène, un alkyle ayant 1 à 12 atomes de carbone, un arylalkyle ayant 7 à 12 atomes de carbone, un aryle ayant 6 à 12 atomes de carbone, un nitrile, un alkylènenitrile ayant 2 à 12 atomes de carbone, un alcoxy ayant 1 à 12 atomes de carbone, un acyle ayant 1 à 12 atomes de carbone, un alcényle ayant 2 à 12 atomes de carbone, un alkylalcényle ayant 3 à 12 atomes de carbone, un arylalcényle ayant 8 à 12 atomes de carbone ou un halogène,
sous réserve qu'au moins un parmi R⁹ à R¹² soit un alkylalcényle ayant 3 à 12 atomes de carbone ;
W et W' sont chacun indépendamment directement liés, ou sont chacun indépendamment un oxygène, un soufre, un sulfoxyde, un sulfone, un alkylidène ayant 1 à 30 atomes de carbone, un alkylène ayant 2 à 30 atomes de carbone, un cycloalkylidène ayant 2 à 30 atomes de carbone, un cycloalkylène ayant 3 à 30 atomes de carbone ou un alkylène substitué avec un phényle ayant 2 à 30 atomes de carbone ; et
-OOCYCOO- et -OOCY'COO- sont chacun indépendamment un acide téréphtalique, un acide isophtalique, un acide dibenzoïque ou un acide naptalènedicarboxylique, dans lesquels le groupe aromatique peut être substitué avec un substituant choisi parmi le groupe consistant en un alkyle ayant 1 à 8 atomes de carbone, un aryle, un alkylaryle et un halogène ; et
(b) introduction d'au moins un groupe fonctionnel choisi parmi un groupe époxyde, un groupe alcoxy, un groupe hydroxy et un groupe amine dans le copolymère préparé à l'étape (a).

2. Polyarylate pouvant être obtenu par le procédé selon la revendication 1.

3. Polyarylate selon la revendication 2, qui comprend une unité représentée par la formule (4) suivante :

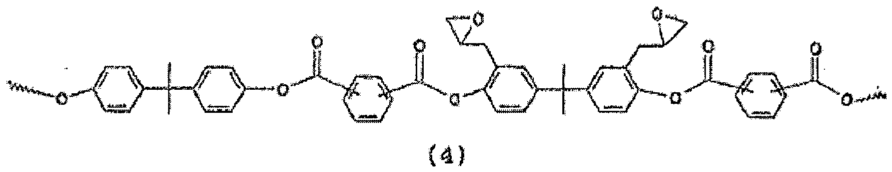

4. Polyarylate selon la revendication 2, qui comprend une unité représentée par la formule (5) suivante :

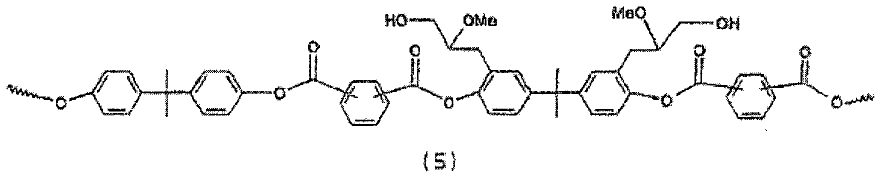

5. Polyarylate selon la revendication 2, qui comprend une unité représentée par la formule (6) suivante :

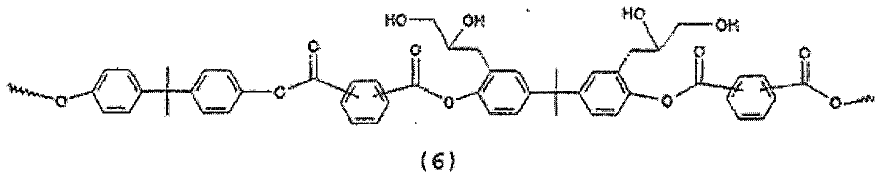

6. Composition d'enduction qui comprend le polyarylate selon l'une quelconque des revendications 2 à 5, ayant un poids moléculaire de 10 000 g/mole ou plus.

7. Film qui est formé à partir du polyarylate selon l'une quelconque des revendications 2 à 5 ayant un poids moléculaire de 10 000 g/mole ou plus.

8. Film selon la revendication 7, qui est un film optique.
